Europäisches Patentamt

European Patent Office

Office européen des brevets

(11) Publication number: **0 286 702 B1**

## EUROPEAN PATENT SPECIFICATION

(45) Date of publication of patent specification: **15.01.92**

(51) Int. Cl.5: **A21D 6/00**, A21D 15/02

(21) Application number: **87105469.8**

(22) Date of filing: **13.04.87**

(54) Frozen bagel dough and its method of manufacture.

(43) Date of publication of application:
**19.10.88 Bulletin 88/42**

(45) Publication of the grant of the patent:
**15.01.92 Bulletin 92/03**

(84) Designated Contracting States:
**AT DE GB NL**

(56) References cited:
**EP-A- 0 145 367
US-A- 3 821 441
US-A- 4 657 769**

**PROCEEDINGS OF THE 56th ANNUAL MEET-
ING OF THE AMERICAN SOCIETY OF BAKERY
ENGINEERS, ASBE, 1980, pages 38-43; B.E.
BOYD: "Manufacture and processing of fro-
zen dough"**

**D.K. TRESSLER et al.: "Food Products For-
mulary", vol. 2, "Cereals, baked goods, dairy
and egg products", page 40, The AVI Pub-
lishing Co., Inc., Westport, Connecticut, US**

**Lebensmittellexikon VEB 1981, S. 316**

(73) Proprietor: **Petrofsky, David
14 Bal Harbour
Creve Coeur Missouri 63146(US)**

Proprietor: **Petrofsky, Robert
1393 Orchard View Drive
Creve Coeur Missouri 63146(US)**

Proprietor: **Shapiro, Jerry
807 Holly Ridge
Manchester Missouri 63011(US)**

Proprietor: **Petrofsky, Leonard
12259 Kingshill Drive
Ladue Missouri 63141(US)**

(72) Inventor: **Petrofsky, David
14 Bal Harbour
Creve Coeur, Missouri, 63146(US)**
Inventor: **Petrofsky, Leonhard
12259 Kingshill Dr.
Ladue, Missouri, 63141(US)**

(74) Representative: **Fleuchaus, Leo, Dipl.-Ing. et al
Fleuchaus & Wehser Melchiorstrasse 42
W-8000 München 71(DE)**

## Description

Background of the Invention

Bread products are an important food for proper nutrition. One popular bread product is known as a bagel. Bagels are commonly hard rolls which are shaped like a donut i.e. circular with a hole in the center. They are made of raised dough in a process which includes simmering in boiling water which is followed by baking. The plain bagel has a glazed browned hard exterior over a firm white interior. The plain bagel can be varied by the addition of toppings and/or fillings or by selection of special dough, such as, pumpernickel.

The manufacture of bagels is a highly skilled specialized art. Normal baking techniques are not applicable to the production of bagels. Also, the shelf life of a baked bagel is relatively short. Therefore, the availability of fresh bagels is limited.

The consumer demand for bagels over the years has increased dramatically. It has become important for supermakets to be able to meet this demand through a supply of fresh bagels. Due to the skill needed to manufacture a bagel, the supermarkets are not able to fill this demand through its store bakeries. Many supermarkets are able to internally fulfill their entire fresh bakery needs except for bagels and croissants. The supermarkets hace been required to purchase estimated quantities from local bakeries or reheat prebaked frozen bagels.

Purchasing bagels from local bakeries has proved unsatisfactory due to the need to estimate quantities in order to avoid having too many extra stale bagels. The problem with the frozen pre-baked bagels is that once they are reheated, the bagels become extremely hard within several hours. This creates serious consumer dissatisfaction because the bagels are inedible by the time the consumer is prepared to consume the bagels. Therefore, there is a pressing need for a bagel which can be stored at a supermarket for long periods and freshly prepared as needed.

Others have recognized this problem but have been unsuccessful in producing a commercially acceptable product. Those who have attempted to solve this problem have produced bagels with an undesirable taste and/or which do not look like a proper bagel since they have a blistery exterior. Thus, leaving the problem unsolved until the present invention.

As reference the following is a typical procedure for manufacturing bakery bagels:

1. The following ingredients are put into a mixer containing a dough hook and mixed for 8-10 minutes at room temperature 15,6° C - 35° C (60-95 degrees F):
   (a) 45,4 kg (100 lbs.) of high gluten bleached malted barley flour;
   (b) 21,8 kg (48 lbs.) water;
   (c) 2,7 kg (6 lbs.) sugar or 0,9kg (2 lbs.) malt;
   (d) 0,9 kg (2 lbs.) salt;
   (e) 1,8 - 0,23 kg (4 - 1/2 lbs.) vegetable oil (optional) ; and
   (f) 0,113 - 0,454 kg (4 oz to 1 lb) yeast
2. When the dough has reached an extendable condition i.e. won't tear during molding since it is strechable it is placed on a pan.
3. From the pan it is either hand shaped into bagels or placed in a divider and then into a former. The divider separates the dough into bagel size portions and the former shapes the dough into the donut shape.
4. The shaped dough pieces are placed on pans which have been coated with corn meal to prevent sticking.
5. The dough pieces are either placed in a refrigerator 4,4° C (40 degrees F) for storage or allowed to proof or rise at room temperature for 45 minutes to two hours (if refrigerated they must be brought back to room temperature before further processing).
6. The dough pieces are next cooked in water at 100° C (212 degrees F) for 30 seconds to 3 minutes until they float on the surface of the water. This provides the hard shiney exterior surface and cleans off the corn meal.
7. The bagels are dried and then baked for 20 minutes at 193° C (380 degrees F). For appearance prior to baking they may be washed in solution containing 50% by volume raw whole eggs and 50% by volume water. These washed bagels may be coated with a topping, such as, poppy seeds.

The commercially available frozen process is similar to the preceding. It is believed that one of the major differences is that the dough is "relaxed" between the divider and the former. It is protected from the outside air for five to ten minutes in order to allow the dough to again become extendable. It also appears to differ by not fully baking the bagel in the factory and the bagel is frozen prior to shipping. When the bagel is thawed in the supermarket the manufacturer recommends that the bagel be treated with heat and humidity prior to final baking. These bagels have a very short commercial shelf life since after 4 to 6 hours they are too difficult to chew.

The present invention advantageously provides a means of manufacturing frozen bagels which can be shipped from a central point to distant retail outlets. An advantage of these bagels is that they can be baked at the retail outlet to obtain bagels which exhibit bakery freshness. The frozen dough has excellent shelf life characteristics and allows complete inventory and cost control. A further advantage it that they have better taste, texture and appearance as a bagel produced by traditional methodes.

Summary of the Invention

The invention involves a frozen dough which has been boiled but not baked. It has at least a one month shelf life in the frozen state. When it is baked it produces a bagel theat remains soft and easily chewable for at least 6 hours and has no blisters.

The invention also involves a process for preparing such a frozen dough product. This process includes the steps of mixing the ingredients, dividing the dough and forming the bagel shapes, placing said shapes in a heated proofer and a wet proofer sequentially, boiling said shapes, and freezing the shapes.

Description of the Preferred Embodiment

The present invention provides a means of manufacturing frozen bagel dough which when baked have all of the characteristics of fresh bakery bagels. This was not true of previous attempts or of the partially baked and then frozen bagel products currently available. The frozen dough of the present invention has a shelf life of at least one month. Usually the shelf life of the products is over 4 months.

Preferably the dough ingredients are based on the following formula:

| INGREDIENT | |
|---|---|
| Flour | 45,4 kg (100 lbs) |
| Water | 20,4 kg (45 lbs) |
| Sugar | 2,3 kg (5 lbs) |
| Salt | 0,454-0,227 kg (1-1/2 lbs) |
| Vegetable Oil | 2,3 kg (5 lbs) |
| Yeast | 0,9-0,23 kg (2-1/2 lbs) |
| Ascorbic Acid | 45,4 g (.1 lbs) |
| Potassium Bromate | 1,36 g (.003 lbs) |
| Beta | 27,2 g (.06 lbs) |
| Calcium Peroxide | 13,6 g (.03 lbs) |
| Calcium Propionate | 136 g (.3 lbs) |

The flour is conventional high gluten bleached barley flour. It is typically brominated at a level of 15 parts per million. The additonal potassiom bromate is added to raise the bromate level by approximately 30 to 45 parts per million. Calcium bromate could be substituted or the flour could be prebromated to the desired levels.

The bromate acts as an oxidizer in the baking stage. It improves gas retention and strengthens the dough. In strengthening the dough it allows the dough to withstand mechanical forces.

The sugar levels are determined by taste. Malt is a common substitute for the sugar. Sugar feeds the yeast so that the dough will rise. In order to balance the sugar, enzymes are sometimes added.

The level of salt will vary with taste. The salt retards the yeast action. Milk powder is a known substitute for salt. With respect to the yeast, reconstituted instant yeast can be used as a substitute.

There are a number of substitutes for vegetable oil. These include shortening and other types of food grade oils. Other well known common ingredients may be addes as needed.

Beta is a reducing agent containing sodium metabisulfate, starch and other edible excipients. A common substitute is L/cystein. The agent produces rapid relaxation of the dough. It can react with the bromate and so should be added separately from the bromate. It prevents the dough from tearing during processing.

Either calcium or sodiom propionate can be used. They act as a mold retarder. The calcium peroxide which also contains soya flour, diam monium phosphate, and tricalcium phosphate acts as a dough conditioner. It improves the dough's handling characteristics by producing a drier dough with fewer stickups. This product is known commercially as DRIZE "P"® and EMPLEX® is a well known commercial substitute.

An important ingredient in the formulation is the addition of ascorbic acid or vitamin C. It is known as an intermediate oxidation agent and dough conditioner. It promotes the cell formation during the early mixing and proofing stage. Further, it is believed that the ascorbic acid provides extended freezer shelf life for the bagel dough. Without the ascorbic acid the frozen dough becomes old i.e. blistered and small in the freezer within 24 hours. Possible substitutes include potassium iodate and calcium iodate.

The ingredients are mixed in a mixer with a dough hook for approximately ten minutes. The dough develops a workable feel and is at a temperature of approximately 30°C (85 degrees F.). It then goes through a divider and former to produce individual bagel shapes. The dough should be processed within 20-25 minutes of mixing. The bagel shapes are then transported to a heated proofer along an open conveyor for 90 seconds. While traveling each of the bagel shapes are flipped. The plant air is approximately 22°C (72 degrees F) and 50% relative humidity.

The bagel shaped dough enters a heated proofer. The proofer is a box in which the temperature is approximately 43°C (110 degrees F) and 50 % relative humidity. The bagels remain in the box for approximatley six minutes. The bagels then pass through the ceiling section of the plant which is approximately 30°C (85 degrees F.) and 50 % relative humidity for 90 seconds.

The bagels then enter a wet proofer which exposes the bagels to hot moist conditions. The wet proofer seals the bagel surfaces by exposing them to a hot moist steam. The proofer or box temperature is about 32°C (90 degrees F.) with 90% relative humidity. The bagels remain in the box for 45 seconds.

The bagels are then cooked in boiling water 100°C (212 degrees F.) for 25 to 30 seconds. It is believed that this cooking step in combination with the above formula provide the unique product characteristics. They are quick frozen by placing them in a -26°C (-15 degrees F.) freezer for 1 hour within 8 minutes of their being removed from the boiling water. They are packaged and stored at -26°C (-15 degrees F.). They can remain in this state for four or more months.

When they are to be sold by a retailer they are allowed to stand at room temperature for thirty to forty minutes or placed in a proof box for twenty minutes, 38°C (100 degrees F.), humidity 90 %. They are then washed with a solution of 50% raw whole egg and 50 % water. A topping can be added and they are baked for 20-25 minutes. A baker fresh bagel is obtained which has a store shelf life comparable to any other just baked bagel of at least 6 hours. Typically the products are still chewy when left uncovered at room temperature for 48 hours. This is compared to other bagel products which are baked prior to freezing and have a very short store shelf life. Naturally, heat and humidity can extend the life of a bagel product.

The present process produces a product which is different from other frozen dough products. Due to the final boiling, the bagels are preproofed. The product does not have to get thawed to room temperature nor does moisture have to be added to the product prior to baking. The frozen bagel of the invention displays unique characteristics that are not predictable from other frozen dough products. Thus, confirmig that the method of making bagels is not comparable to other frozen dough processes and that general baking techniques are not applicable to the manufacturing of bagels.

Although other bakery products are not normally boiled prior to baking, it is believed that the present invention could be applicable to certain other products. For instance, the process of the invention could make it advantageous to boil certain types of breads and rolls prior to freezing in order to obtain the shelf life and product stability characteristics of the invention.

## Claims

1. A process for manufacturing frozen dough products, that can be taken from the freezer and fully baked in an oven comprising the steps of:

   (a) mixing the ingredients which contain a first oxidizer that reacts with the flour during the early mixing stage until said dough develops a workable feel and reached an extended condition;
   (b) dividing and forming the dough into product shapes;
   (c) proofing said product shapes until said dough is relaxed;
   (d) freezing that shapes;

   **characterized in**

   (e) that while mixing the ingredients a second oxidizer is added to the ingredients which reacts with the flour during baking,

(f) and that the product shapes are boiled at approximately 100˚C (212˚F.) prior to said freezing of said products shapes.

2. Process according to claim 1 wherein said first oxidizer is ascorbic acid.

3. Process of claim 1 wherein prior to baking said product shapes are washed with a solution of raw egg and water.

4. Process according to claim 1 wherein said second oxidizer is potassium bromate.

5. Process according to claim 1 wherein said frozen dough product shapes are bagels.

6. Process according to claim 1 further comprising the step of baking said product shapes until they are no longer raw.

7. Process according to claim 1 wherein the proofing of said product shapes comprises exposing that shapes to heat at approximately 32˚C (90˚F.) and moisture with a 90 % relative humidity.

**Revendications**

1. Procédé pour fabriquer des produits à base de pâte congelée, que l'on peut sortir du congélateur et finir de cuire dans un four, comprenant les stades suivants :

a) mélanger les ingrédients qui contiennent un premier oxydant qui réagit avec la farine lors du premier stade de mélange jusqu'à ce que la pâte donne la sensation qu'elle peut être travaillée et qu'elle ait atteint un état étiré;
b) diviser et former la pâte en ébauches de produits;
c) conditionner ces ébauches de produits jusqu'à ce que la pâte soit reposée;
d) congeler ces ébauches;

caractérisé en ce que

e) lors du mélange des ingrédients, on ajoute à ceux-ci un deuxième oxydant qui réagit avec la farine lors de la cuisson au four, et
f) les ébauches de produits sont pochées à environ 100˚C (212˚F) avant leur congélation.

2. Procédé selon la revendication 1, dans lequel le premier oxydant est l'acide ascorbique.

3. Procédé selon la revendication 1, dans lequel, avant cuisson au four, les ébauches de produits sont lavées avec une solution d'oeufs crus et d'eau.

4. Procédé selon la revendication 1, dans lequel le deuxième oxydant est le bromate de potassium.

5. Procédé selon la revendication 1, dans lequel les ébauches de produits à base de pâte congelée sont des "bagels".

6. Procédé selon la revendication 1, comportant en outre le stade consistant à cuire au four ces ébauches de produits jusqu'à ce qu'ils ne soient plus crus.

7. Procédé selon la revendication 1, dans lequel le conditionnement de ces ébauches de produits consiste à les exposer à la chaleur à environ 32˚C (90˚F) et à une humidité relative de 90%.

**Patentansprüche**

1. Verfahren zur Herstellung gefrorener Teigprodukte, die aus dem Gefriergerät genommen und gebacken werden können, die die Schritte enthalten:

(a) Mischung der Zutaten, die ein erstes Oxidationsmittel enthalten, der mit dem Mehl während des ersten Mischzustands reagiert, bis der Teig einen bearbeitbaren Eindruck gewinnt und einen ausgedehnten Zustand erreicht,

(b) Trennen und Formen des Teigs in Produktteile;

(c) Behandeln der Produktteile in einem Klima-oder Gärschrank bis der Teig sich entspannt;

(d) Einfrieren der Produktteile,

**dadurch gekennzeichnet,**

(e) daß während des Mischens der Zutaten den Zutaten ein zweites Oxidationsmittel zugesetzt wird, welches mit dem Mehl während des Backens reagiert,

(f) und daß die Produktteile bei ungefähr 100 °C (212 °F) vor dem Einfrieren der Produktteile gekocht wird.

2. Verfahren nach Anspruch 1, **dadurch gekennzeichnet,**

daß das erste Oxidationsmittel Ascorbinsäure ist.

3. Verfahren nach Anspruch 1, **dadurch gekennzeichnet,**

daß die Produktteile vor dem Backenmit einer Lösung aus rohem Ei und Wasser gewaschen werden.

4. Verfahren nach Anspruch 1, **dadurch gekennzeichnet,**

daß das zweite Oxidationsmittel Kaliumbromat ist.

5. Verfahren nach Anspruch 1, **dadurch gekennzeichnet,**

daß die gefrorenen Teigproduktteile Bagel sind.

6. Verfahren nach Anspruch 1, **dadurch gekennichnet,**

daß die Produktteile gebacken werden, bis sie nicht länger roh sind.

7. Verfahren nach Anspruch 1, **dadurch gekennzeichnet,**

daß die Behandlung im Klima-oder Gärschrank beinhaltet, daß die Teile ungefähr 32 °C (90 °F) Wärme und 90% relative Luftfeuchtigkeit ausgesetzt werden.